# EUROPEAN PATENT SPECIFICATION

(11) **EP 4 484 146 B1**
(45) Date of publication and mention of the grant of the patent: **28.05.2025**
(21) Application number: 23193639.4
(22) Date of filing: 28.08.2023
(51) Int. Cl.: B29D 30/06, B29D 30/72, B60C 13/00

(54) **TIRE MOLD FOR FORMING ATYPICAL SIDEWALL PATTERN AND TIRE MANUFACTURED USING THE SAME**
REIFENFORM ZUR FORMUNG EINES ATYPISCHEN SEITENWANDMUSTERS UND DAMIT HERGESTELLTER REIFEN
MOULE POUR PNEU POUR FORMER UN MOTIF DE PAROI LATÉRALE ATYPIQUE ET PNEU FABRIQUÉ À L'AIDE DE CELUI-CI

(30) Priority: 27.06.2023 KR 20230082616
(43) Date of publication of application: 01.01.2025
(73) Proprietor: Dynamic Design Co., Ltd., Buk-gu Gwangju 61089 (KR)
(72) Inventor: HEO, Yong-Jun, 61089 Buk-gu (KR); LEE, Ki-Seob, 61089 Buk-gu (KR)
(74) Representative: Hauck Patentanwaltspartnerschaft mbB

(56) References cited:
- EP-A1- 3 409 511
- EP-A1- 3 603 997
- EP-A1- 4 180 245
- JP-A- 2014 121 978
- JP-A- 2014 136 487
- JP-A- 2016 084 042
- US-A1- 2017 050 473

## Description

### [BACKGROUND OF THE INVENTION]

### 1. FIELD OF THE INVENTION

The present invention relates to a field of tires for a vehicle, and more particularly, to a tire mold for forming an atypical pattern with excellent visibility on a sidewall of the tire and a tire manufactured using the tire mold.

### 2. DESCRIPTION OF THE RELATED ART

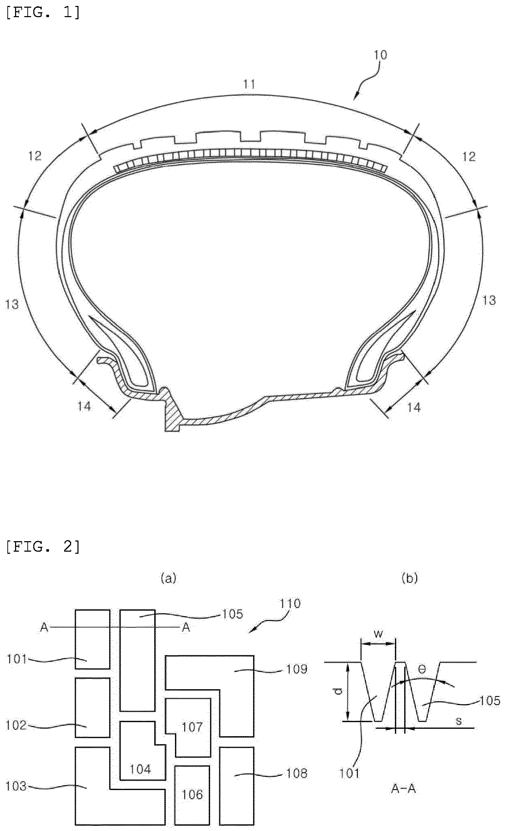

In general, as shown in FIG. 1, a body of a tire includes: a tread 11 which is a thick rubber layer in direct contact with the road surface; shoulders 12 which form shoulder portions of the tire and have the largest thickness; sidewalls 13 which enable side portions of the tire to perform a flexible bending movement, thereby improving riding comfort, and have marks engraved thereon to indicate the type and specification of the tire, letters, log and name of a manufacturer, etc.; and beads 14 which wrap end portions of the cord fabrics so that the tire is stably mounted on the rim.

The marks engraved on the sidewall are formed through a tire mold, and a recess structure is located on the surface of the tire mold, so as to have a pattern structure corresponding to the surface of the tire through vulcanization.

Basically, the tire is black, but the marks engraved on the sidewall need to have a different contrast from the surroundings with so-called good visibility so that they can be easily seen with eyes.

In order to improve the visibility of the marks engraved on the sidewall of the tire, conventionally, a method of forming a plurality of fine homogeneous concavo-convex portions, etc. in a marking region of the sidewall has been proposed (Patent Document 1). This technique is intended to cause diffuse reflection by forming inhomogeneous concavo-convex portions in the marking region of the sidewall of the tire. However, since the pattern is not processed in this technique, but the type of metal is changed or the concavo and convex on the surface are changed, there is a great limitation in improving the visibility of the marks.

In addition, there is a technique for enhancing the visibility of the marks by providing protruding pattern units having curved portions on the sidewall (Patent Document 2). However, since this technique is still a method of arranging the protruding pattern units, a relatively wide space is formed between the protruding pattern units, such that it is difficult to expect a desired improvement in the visibility of the marks.

### [PRIOR ART DOCUMENT]

### [PATENT DOCUMENT]

(Patent Document 1) Patent Document 1: Korean Patent Laid-Open Publication No. 10-2007-0042679
(Patent Document 2) Patent Document 2: Korean Patent Laid-Open Publication No. 10-2020-0131291
US 2017050473 A1 describes a tire made of rubbery material comprising a sidewall. The sidewall comprises at least one coded matrix symbol, the coded matrix symbol comprising dark parts and light parts, the dark parts being made up of a texture formed as an integral part of the sidewall and contrasting against the rest of the tire. The texture is an organized arrangement of a plurality of elements.
JP 2014121978 A describes a plurality of ridges extending in the long side direction are provided in quadrilateral-shaped patterns, forming a decoration portion. The quadrilateral-shaped patterns with ridges facing toward different directions are arranged so that long sides and short sides are adjacent to each other. Respective quadrilateral patterns are arranged so that the maximum length in which a boundary portion between adjacent quadrilateral patterns continuously extends in the same direction becomes the total of lengths of one long side of one quadrilateral pattern and one short side of the other quadrilateral pattern. This leads to suppressing growth of cracks within the length of the long side of the quadrilateral pattern or the maximum length of the boundary portion and also allowing at least one of the quadrilateral patterns with ridges facing toward different directions to be visually recognized even when the outer surface of the side wall portion is viewed from in any direction.
EP 3409511 A1 describes a tire including a pattern portion, in which plural ridges having ridgelines are arranged adjacent to each other. On a tire surface, the ridgelines including a main body portion and a first extending portion and a second extending portion that extend in different directions from the main body portion in plan view. The first extending portion of a ridge and the second extending portion of an adjacent ridge at least partially overlap each other when viewed from a direction orthogonal to an adjacent direction of the ridges. A height of the ridge is from 0.2 mm to 0.5 mm. Ridges adjacent to each other are arranged at a constant pitch of from 0.15 mm to 0.35 mm.
JP 2016084042 A describes a decorative recessed part having a first-directional ridge pattern and a second-directional ridge pattern arranged alternately. The first-directional ridge pattern has a plurality of main ridges and sub-ridges, projecting from a bottom face. The respective ridges are arranged in parallel such that the ridges extend in the same direction. Intervals between adjacent ridges among the main ridges are wider than intervals between adjacent ridges among the sub-ridges.

### [SUMMARY OF THE INVENTION]

In consideration of the above-mentioned circumstances, it is an object of the present invention to provide a tire mold including a plurality of atypical pattern unit formation parts arranged in a marking region of marks to improve visibility of marks engraved on a sidewall of a tire.

Another object of the present invention is to provide a tire having a series of protruding pattern unit arrangements matched with atypical pattern unit formation parts manufactured using the tire mold.

In accordance with the invention is a tire mold provided in claim 1 and a tire provided in claim 8.

In order to achieve the above objects, the technical idea of the present invention relates to a pattern structure configured in such a manner that a plurality of basic pattern unit formation parts are regularly arranged as a whole in a region of a tire mold corresponding to a marking region of a sidewall of the tire, but a plurality of right-angled recesses are irregularly arranged within one basic pattern unit formation part so as to have horizontal and vertical asymmetry, and thereby significantly improving visibility of marks in the marking region.

In order to achieve the above objects, according to an aspect of the present invention, there is provided a tire mold for forming an atypical sidewall pattern, wherein the tire mold is configured to form a marking region of a sidewall of a tire, characterized in that: the tire mold includes a plurality of basic pattern unit formation parts arranged in a region thereof corresponding to the marking region of the sidewall, and the basic pattern unit formation part is formed of a plurality of right-angled recesses when viewed from a surface of the tire mold, and the plurality of right-angled recesses are asymmetrically disposed horizontally and vertically, taken as a whole.

Preferably, the basic pattern unit formation parts are regularly arranged to form a series of pattern unit arrangements.

Preferably, the plurality of right-angled recesses are irregularly arranged in the basic pattern unit formation part.

Preferably, the plurality of right-angled recesses include at least one rectangular recess, or an inverted L-shaped recess or L-shaped recess.

More preferably, the plurality of right-angled recesses in the basic pattern unit formation part are curved or formed only of straight lines without being curved or curves.

Most preferably, the basic pattern unit formation part has an inverted trapezoidal cross-sectional shape.

More preferably, the basic pattern unit formation part has a unit area in a range of 0.8 to 1.5 mm, without a limitation in a size thereof.

Preferably, the basic pattern unit formation part has a depth in a range of 0.2 to 0.5 mm.

Preferably, the basic pattern unit formation parts are located in a marking region other than mark portions such as characters or a logo.

In addition, according to another aspect of the present invention, there is provided a tire having an atypical sidewall pattern manufactured by the tire mold.

The tire mold of the present invention has atypical pattern unit formation parts, such that the visibility of marks engraved on the tire sidewall can be significantly improved.

In fact, in the tire manufactured using the tire mold of the present invention, atypical protruding patterns are arranged on the sidewall with uniform regularity, thereby improving the visibility of marks engraved on the sidewall.

### [BRIEF DESCRIPTION OF THE DRAWINGS]

The above and other objects, features and other advantages of the present invention will be more clearly understood from the following detailed description taken in conjunction with the accompanying drawings, in which:
- FIG. 1: is a partial cross-sectional view illustrating the structure of a typical tire for a vehicle in detail;
- FIG. 2a: is a plan view illustrating pattern unit formation parts formed in a tire mold of the present invention;
- FIG. 2b: is a cross-sectional view taken on line A-A of FIG. 2a;
- FIG. 3: is a plan view illustrating a state where the basic pattern unit formation parts shown in FIG. 2a are arranged in the tire mold;
- FIG. 4a: is a plan view illustrating a second pattern unit formation part provided in a tire mold according to another embodiment of the present invention;
- FIG. 4b: is a plan view illustrating a third pattern unit formation part provided in a tire mold according to another embodiment of the present invention;
- FIG. 5: is a plan view of a pattern unit formation part for comparison with that of the present invention; and
- FIG. 6: is a plan view illustrating a state where the basic pattern unit formation parts shown in FIG. 5 are arranged in the tire mold.

### [DETAILED DESCRIPTION OF THE INVENTION]

Embodiments of the present invention are provided to more clearly describe the present invention to those skilled in the art, the following embodiments may be modified in various forms, and the scope of the present invention is not limited to the following embodiments. Rather, the embodiments are provided to make the present disclosure be more faithful and clear, and to clearly transmit the technical idea of the present invention to those skilled in the art. In addition, the thickness or size of each layer in the drawings is exaggerated for the convenience and clarity of the description.

In the present disclosure, the terms such as first and second are used to describe various members, components, regions, layers and/or portions, but it is obvious that these members, components, regions, layers and/or portions should not be limited by these terms.

Hereinafter, a tire mold according to the present invention will be described in detail with reference to the accompanying drawings.

### [FIRST EMBODIMENT]

FIG. 2 is views illustrating basic first pattern unit formation parts formed in the tire mold of the present invention, wherein FIG. 2a is a plan view thereof, and FIG. 2b is a cross-sectional view taken on line A-A of FIG. 2a.

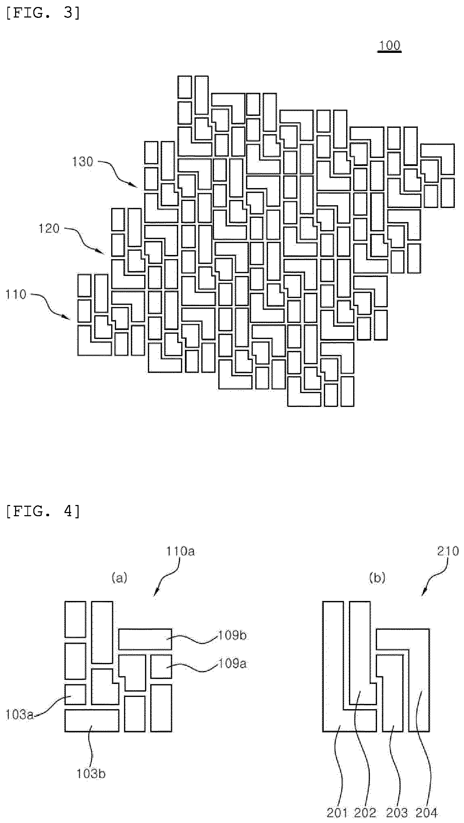

FIG. 3 is a plan view illustrating a state where a plurality of first basic pattern unit formation parts shown in FIG. 2a are arranged in the tire mold.

As shown in FIGS. 2 and 3, a tire mold 100 of the present invention includes a plurality of basic pattern unit formation parts 110, 120, 130 and ..., which are arranged in a region thereof corresponding to a marking region of a sidewall of the tire, thus to form a series of pattern unit arrangements.

In the present disclosure, the basic pattern unit formation part refers to one pattern unit formation part, which means a minimum unit of pattern arrangement in the tire mold.

As shown in FIG. 2a, the first basic pattern unit formation part 110 is formed of a plurality of right-angled recesses 101, 102, 103, and ..., when viewed from a surface of the tire mold, and the plurality of right-angled recesses 101 to 109 are asymmetrically arranged horizontally and vertically, taken as a whole. For example, right-angled recesses 101 to 105 on a left side and right-angled recesses 106 to 109 on a right side in the basic pattern unit formation part 110 are relatively different in terms of the number and size and are asymmetrical to each other. Similarly, right-angled recesses 101, 102, 105, 107, and 109 on an upper side and right-angled recesses 103, 104, 106, and 108 on a lower side in the basic pattern unit formation part 110 are also different in terms of the number and size and are asymmetrical to each other.

As shown in FIG. 2a, the plurality of right-angled recesses 101 to 109 forming the basic pattern unit formation part 110 may be at least one rectangular recess 101, 102, 105, 106, or 108, or may include inverted L-shaped recesses 107 and 109 or L-shaped recesses 103 and 104. The technical idea of the present invention is that the plurality of right-angled recesses are irregularly arranged in one basic pattern unit formation part 110 so as to be asymmetrical to each other. Any basic pattern unit formation part is preferably employed as long as it is configured so that the plurality of right-angled recesses are disposed to have an irregular arrangement, that is, an asymmetrical arrangement.

These plurality of right-angled recesses 101 to 109 are formed by conventional laser processing.

It is not necessary to limit the size of the basic pattern unit formation part 110. However, when these formation parts are located within a unit area in a range of about 0.8 to 1.5 mm, the visibility of the marks is improved.

As shown in FIG. 2b, the plurality of right-angled recesses 101 and 105 formed in the basic pattern unit formation part 110 preferably have an inverted trapezoidal cross-sectional shape.

The plurality of right-angled recesses 101 to 109 preferably have a depth d in a range of about 0.2 to 0.5 mm, and more preferably in a range of about 0.3 to 0.5 mm.

A distance S between the plurality of right-angled recesses 101 to 109 in the basic pattern unit formation part 110 is preferably in a range of 0.03 to 0.1 mm, and more preferably in a range of 0.04 to 0.06 mm.

The plurality of right-angled recesses 101 to 109 preferably have a base width w in a range of about 0.14 to 0.5 mm, and more preferably in a range of about 0.16 to 0.20 mm. In addition, an inclination angle ? between the plurality of right-angled recesses 101 to 109 is preferably about 22 to 30 degrees, and more preferably about 24 to 28 degrees.

It is more preferable that the plurality of right-angled recesses 101 to 109 are formed only of straight lines without being curved or curves. Although the right-angled recesses 101 to 109 are adjacent to each other, a space between the right-angled recesses is minimized, such that visibility of the marks in the marking region due to diffuse reflection may be greatly improved.

As mentioned in the technical idea of the present invention, the plurality of right-angled recesses 101 to 109 are irregularly arranged in the basic pattern unit formation part 110 to have irregularity. On the other hand, as shown in FIG. 3, the plurality of pattern unit formation parts 110, 120, 130 and ... are regularly arranged in the region of the tire mold 100 corresponding to the marking region of the sidewall of the tire.

As shown in FIGS. 2a and 3, another basic pattern unit formation part 120 is located adjacent to an empty region between two right-angled recesses 105 and 109 at the upper right of the basic pattern unit formation part 110. In the same way, another basic pattern unit formation part 130 is also located adjacent to the empty area between the two right-angled recesses at the upper right of the basic pattern unit formation part 120.

In the tire manufactured by the tire mold of the present invention having the above-described pattern, the marks engraved in the marking region of the sidewall become clearer due to the irregular arrangement of the sidewall patterns around the surroundings.

### [SECOND AND THIRD EMBODIMENTS]

As described above, the basic pattern unit formation part of the present invention is not limited to the first pattern unit formation part, and may be composed of a plurality of right-angled recesses capable of imparting asymmetry. FIG. 4 illustrates another embodiment of the various types of basic pattern unit formation parts provided in the tire mold of the present invention, wherein FIG. 4a is a plan view illustrating a second pattern unit formation part 110a, and FIG. 4b is a plan view illustrating a third pattern unit formation part 210.

As shown in FIG. 4a, the second pattern unit formation part 110a is basically similar to the first pattern unit formation part 110. However, they are different in that the right-angled recess 103 at the lower left corner in FIG. 2a is formed of two right-angled recesses 103a and 103b in FIG. 4a, and the right-angled recess 109 at the upper right corner in FIG. 2a is formed of two right-angled recesses 109a and 109b in FIG. 4a. Similar to the first basic pattern unit formation part 110, also in the second basic pattern unit formation part 110a, all the plurality of right-angled recesses are asymmetrically arranged vertically and horizontally.

As shown in FIG. 4b, the third pattern unit formation part 210 is composed of four right-angled recesses 201 to 204, and has an asymmetric shape vertically and horizontally within the pattern unit formation part, taken as a whole.

According to the experiments performed by the present inventors, it can be seen that the tire manufactured by the tire mold having the first and second pattern unit formation parts has better visibility of the marks in the marking region of the sidewall than the tire manufactured by the tire mold having the third pattern unit formation part.

### [COMPARATIVE EXAMPLE]

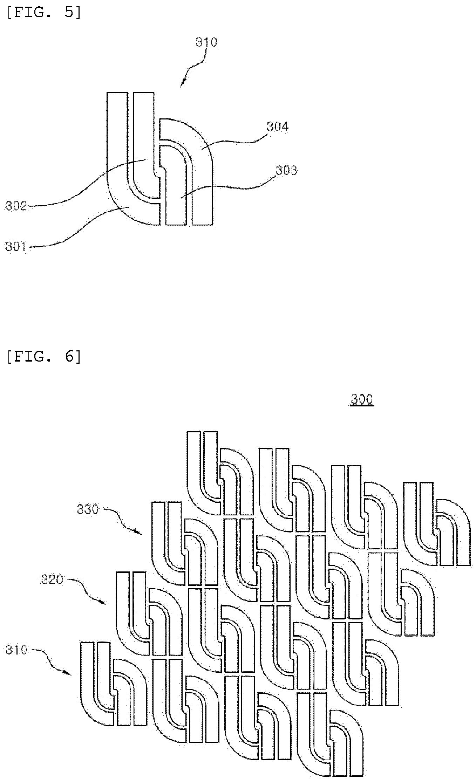

Meanwhile, FIG. 5 is a plan view of the pattern unit formation part for comparison with that of the present invention, and FIG. 6 is a plan view illustrating a state where the pattern unit formation parts shown in FIG. 5 are arranged in the tire mold.

Unlike the basic pattern unit formation parts 110 and 210 of the present invention, a basic pattern unit formation part 310 of the comparative example shown in FIG. 5 includes a plurality of curved recesses 301-304 having a curved or arc shape. In this case, even if the plurality of curved recesses 301 to 304 in the basic pattern unit formation part 310 are asymmetrically arranged taken as a whole, as shown in FIG. 6, when the adjacent pattern unit formation parts 310, 320, 330 and ... are arranged with each other, an empty space more than necessary is generated in the curved or curved portion. As in the comparative example, in the case of having the curved recesses, diffuse reflection is reduced, such that the visibility of marks in the marking region of the sidewall is decreased. Therefore, in the tire mold of the present invention, the basic pattern unit formation part needs to be formed of the plurality of right-angled recesses as viewed from the surface of the tire mold. In addition, it is preferable that the plurality of right-angled recesses are asymmetrically disposed horizontally and vertically, taken as a whole.

While the present invention has been described with reference to the embodiments, the present invention is not limited to the above-described embodiments, and it will be understood by those skilled in the art that various modifications and variations may be made therein without departing from the scope of the present invention as defined by the appended claims.

Parts of the description and drawings referring to embodiments which are not covered by the claims are not presented as embodiments of claimed subject matter but as background examples useful for understanding the invention and may, if applicable, provide details to further specify embodiments claimed or described in this application.

### [INDUSTRIAL APPLICABILITY]

The present invention relates to the field of tires for a vehicle, and specifically, the tire manufactured using the tire mold of the present invention has an advantage of excellent visibility of the marks in the marking region of the sidewall.

### [DESCRIPTION OF REFERENCE NUMERALS]

100, 200, 300: Tire mold
101 to 109, 201-204: Right-angled recess
110, 110a, 120, 130, 210, 310, 320, 330: Basic pattern unit formation part
301-304: Curved recess

## Claims

1. A tire mold (100) for forming an atypical sidewall pattern, wherein the tire mold (100) is configured to form a marking region of a sidewall of a tire, wherein
the tire mold (100) comprises a plurality of basic pattern unit formation parts (110, 120, 130) arranged in a region thereof corresponding to the marking region of the sidewall, and
the basic pattern unit formation part (110) is formed of a plurality of right-angled recesses (101 , 102, 103) when viewed from a surface of the tire mold (100), wherein the basic pattern unit formation parts (110, 120, 130) are regularly arranged to form a series of pattern unit arrangements,
**characterized in that** the plurality of right-angled recesses (101 , 102, 103) are asymmetrically arranged horizontally and vertically within each basic pattern unit formation part (110, 120, 130), taken individually.

2. The tire mold (100) for forming an atypical sidewall pattern according to claim 1, wherein the plurality of right-angled recesses (101 , 102, 103) include at least one rectangular recess, or an inverted L-shaped recess or L-shaped recess.

3. The tire mold (100) for forming an atypical sidewall pattern according to claim 1, wherein the plurality of right-angled recesses (101 , 102, 103) in the basic pattern unit formation parts (110, 120, 130) are curved or formed only of straight lines without being curved or curves.

4. The tire mold (100) for forming an atypical sidewall pattern according to claim 1, wherein the basic pattern unit formation part (110, 120, 130) has an inverted trapezoidal cross-sectional shape.

5. The tire mold (100) for forming an atypical sidewall pattern according to claim 4, wherein the basic pattern unit formation part (110, 120, 130) has a unit length in a range of 0.8 to 1.5 mm.

6. The tire mold (100) for forming an atypical sidewall pattern according to claim 4, wherein the basic pattern unit formation part (110, 120, 130) has a depth in a range of 0.2 to 0.5 mm.

7. The tire mold (100) for forming an atypical sidewall pattern according to claim 1, wherein the basic pattern unit formation parts (110, 120, 130) are located in a marking region other than mark portions such as characters or a logo.

8. A tire comprising an atypical sidewall pattern manufactured by the tire mold (100) according to any one of claims 1 to 7.

## Patentansprüche

1. Reifenform (100) zur Formung eines atypischen Seitenwandmusters, wobei die Reifenform (100) so ausgestaltet ist, dass sie einen Markierungsbereich einer Seitenwand eines Reifens formt, wobei
die Reifenform (100) eine Vielzahl von Teilen (110, 120, 130) zur Bildung einer Einheit eines Grundmusters umfasst, die in einem Bereich davon angeordnet sind, der dem Markierungsbereich der Seitenwand entspricht, und
der Teil (110) zur Bildung einer Einheit eines Grundmusters aus einer Vielzahl von rechtwinkligen Vertiefungen (101, 102, 103), wenn von einer Oberfläche der Reifenform (100) aus betrachtet, gebildet ist, wobei die Teile (110, 120, 130) zur Bildung einer Einheit eines Grundmusters regelmäßig angeordnet sind, sodass sie eine Reihe von Mustereinheitsanordnungen bilden,
**dadurch gekennzeichnet, dass** die Vielzahl von rechtwinkligen Vertiefungen (101, 102, 103) einzeln betrachtet horizontal und vertikal asymmetrisch innerhalb jedes Teils (110, 120, 130) zur Bildung einer Einheit eines Grundmusters angeordnet sind.

2. Reifenform (100) zur Formung eines atypischen Seitenwandmusters nach Anspruch 1, wobei die Vielzahl von rechtwinkligen Vertiefungen (101, 102, 103) mindestens eine rechteckige Vertiefung oder eine Vertiefung mit invertierter L-Form oder eine L-förmige Vertiefung umfassen.

3. Reifenform (100) zur Formung eines atypischen Seitenwandmusters nach Anspruch 1, wobei die Vielzahl von rechtwinkligen Vertiefungen (101, 102, 103) in den Teilen (110, 120, 130) zur Bildung einer Einheit eines Grundmusters gekrümmt sind oder ausschließlich aus geraden Linien, die keine Krümmungen aufweisen oder sind, gebildet sind.

4. Reifenform (100) zur Formung eines atypischen Seitenwandmusters nach Anspruch 1, wobei der Teil (110, 120, 130) zur Bildung einer Einheit eines Grundmusters eine invertierte trapezförmige Querschnittsform aufweist.

5. Reifenform (100) zur Formung eines atypischen Seitenwandmusters nach Anspruch 4, wobei der Teil (110, 120, 130) zur Bildung einer Einheit eines Grundmusters eine Einheitslänge in einem Bereich von 0,8 bis 1,5 mm aufweist.

6. Reifenform (100) zur Formung eines atypischen Seitenwandmusters nach Anspruch 4, wobei der Teil (110, 120, 130) zur Bildung einer Einheit eines Grundmusters eine Tiefe in einem Bereich von 0,2 bis 0,5 mm aufweist.

7. Reifenform (100) zur Formung eines atypischen Seitenwandmusters nach Anspruch 1, wobei sich die Teile (110, 120, 130) zur Bildung einer Einheit eines Grundmusters in einem Markierungsbereich befinden, der sich von Markierungsabschnitten wie Zeichen oder einem Logo unterscheidet.

8. Reifen, der ein atypisches Seitenwandmuster umfasst, hergestellt mittels der Reifenform (100) nach einem beliebigen der Ansprüche 1 bis 7.

## Revendications

1. Moule pour pneu (100) permettant de former un motif de paroi latérale atypique, dans lequel le moule pour pneu (100) est configuré pour former une région de marquage d'une paroi latérale d'un pneu, dans lequel
le moule pour pneu (100) comprend une pluralité de parties de formation d'unité de motif basique (110, 120, 130) agencées dans une région de celui-ci correspondant à la région de marquage de la paroi latérale, et la partie de formation d'unité de motif basique (110) est constituée d'une pluralité de cavités à angle droit (101, 102, 103), vue depuis une surface du moule pour pneu (100), dans lequel les parties de formation d'unité de motif basique (110, 120, 130) sont agencées de façon régulière pour former une série d'agencements d'unités de motif,
**caractérisé en ce que** la pluralité de cavités à angle droit (101, 102, 103) sont agencées de façon asymétrique horizontalement et verticalement dans chaque partie de formation d'unité de motif basique (110, 120, 130), prises individuellement.

2. Moule pour pneu (100) permettant de former un motif de paroi latérale atypique selon la revendication 1, dans lequel la pluralité de cavités à angle droit (101, 102, 103) incluent au moins une cavité rectangulaire ou une cavité en forme de L inversé ou une cavité en forme de L.

3. Moule pour pneu (100) permettant de former un motif de paroi latérale atypique selon la revendication 1, dans lequel la pluralité de cavités à angle droit (101, 102, 103) dans les parties de formation d'unité de motif basique (110, 120, 130) sont incurvées ou constituées uniquement de lignes droites sans être incurvées ou des courbes.

4. Moule pour pneu (100) permettant de former un motif de paroi latérale atypique selon la revendication 1, dans lequel la partie de formation d'unité de motif basique (110, 120, 130) présente une forme de section transversale trapézoïdale inversée.

5. Moule pour pneu (100) permettant de former un motif de paroi latérale atypique selon la revendication 4, dans lequel la partie de formation d'unité de motif basique (110, 120, 130) présente une longueur d'unité dans la plage de 0,8 à 1,5 mm.

6. Moule pour pneu (100) permettant de former un motif de paroi latérale atypique selon la revendication 4, dans lequel la partie de formation d'unité de motif basique (110, 120, 130) présente une profondeur dans la plage de 0,2 à 0,5 mm.

7. Moule pour pneu (100) permettant de former un motif de paroi latérale atypique selon la revendication 1, dans lequel les parties de formation d'unité de motif basique (110, 120, 130) se situent dans une région de marquage autre que des portions de marques telles que des lettres ou un logo.

8. Pneu comprenant un motif de paroi latérale atypique, fabriqué à l'aide du moule pour pneu (100) selon l'une quelconque des revendications 1 à 7.
